# EUROPEAN PATENT SPECIFICATION

(11) **EP 4 427 822 B1**
(45) Date of publication and mention of the grant of the patent: **26.11.2025**
(21) Application number: 24161631.7
(22) Date of filing: 06.03.2024
(51) Int. Cl.: A63B 22/06, G06F 3/01, A63B 24/00, A63B 71/06, F21V 8/00

(54) **INPUT MODULES FOR EXERCISE MACHINES**
EINGABEMODULE FÜR ÜBUNGSGERÄTE
MODULES D'ENTRÉE POUR MACHINES D'EXERCICE

(30) Priority: 06.03.2023 US 202363450247 P; 04.03.2024 US 202418594531
(43) Date of publication of application: 11.09.2024
(73) Proprietor: Life Fitness, LLC, Franklin Park, IL 60131 (US)
(72) Inventor: Joseph, Gregory A., Streamwood, 60107 (US); Rickert, Warren A., Glen Ellyn, 60137 (US); Zhao, Ellen, Lake Zurich, 60047 (US); Stokes, Ian W., Carbondale, 81623 (US)
(74) Representative: Håmsø Patentbyrå AS

(56) References cited:
- US-A1- 2010 304 932
- US-A1- 2012 077 641
- US-A1- 2019 224 520
- US-B1- 9 791 930

## Description

### CROSS-REFERENCE TO RELATED APPLICATION

The present disclosure is based on and claims priority to U.S. Provisional Patent Application No. 63/450,247 filed March 6, 2023 and U.S. Patent Application no. 18/594,531 filed March 4, 2024.

### FIELD

The present disclosure relates to exercise machines, and more particularly to input modules for exercise machines.

### BACKGROUND

Relevant background information can be found in the following U.S. Patent and U.S. Patent Application Publications.

U.S. Pat. No. 9,646,781 discloses a push button encoder that comprises a push button, a base that supports the push button, and a printed circuit board. Pushing the push button engages the printed circuit board and thereby causes the printed circuit board to output an electrical signal. A spring resiliently supports the printed circuit board with respect to the base such that the printed circuit board is movable with respect to the base when the push button is pushed.

U.S. Pat. Appl. Pub. No. 2008/0242511 discloses user interface methods and apparatuses for controlling exercise apparatuses. An example user interface includes an exercise parameter input and an indicator associated with the exercise parameter input, and a control unit to activate the indicator in response to a training routine to prompt a user of the exercise apparatus to adjust an operation of the exercise apparatus via the exercise parameter input.

U.S. Pat. Appl. Pub. No. 2021/0283465 discloses a fitness machine providing solidstate controls. The fitness machine includes a frame and a moving portion supported by the frame that moves relative to the frame. An adjustment device adjusts the movement of the moving portion. A console has a display for displaying information when the fitness machine is in use. An input device receives a user input movement for controlling the adjustment device. The input device includes a contact surface that detects a direction of the user input movement thereon, and the input device includes a movement simulating indicator that generates a display. A control system is coupled to the input device and the adjustment device. The control system controls the adjustment device based on the direction of the user input movement received by the input device. The control system causes the display of the movement simulating indicator to move in the direction of the user input movement.

U.S. Pat. Appl. Pub. No. 2019/0224520 discloses an exercise guide system. The exercise guide system guides a user in an exercise on a treadmill, of which the speed is controllable according to the user's free will. The exercise guide system includes an input unit configured to receive at least one target exercise speed, and a detection unit configured to detect an actual exercise speed of the user on the treadmill. The exercise guide system further includes an exercise guide unit configured to provide information related to the actual exercise speed and the target exercise speed so that the user personally adjusts an exercise speed on the treadmill.

U.S. Pat. Appl. Pub. No. 2010/0304932 discloses a method for controlling an exercise apparatus via a control interface of an exercise apparatus, including steps of controlling a touch screen to display an information field, and then monitoring the touch screen to detect whether a touch has occurred on the surface of the touch screen and whether the touch is located in an input zone which has a plurality of sensing areas in the information field. A user can use one of specific actions, such as drag, to move a first tag in the input zone from a first sensing area to a second sensing area. And one of the steps of the method relocates the first tag proximate to the second sensing area to have a portion of the first tag to point at the second sensing area. Then, the final step of the method operates the exercise apparatus from a first condition using a first value corresponding to the first sensing area to a second condition using a second value corresponding to the second sensing area.

### SUMMARY OF THE INVENTION

The present invention is directed to a exercise machine according to claim 1. Additional features and embodiments of the invention are defined in the dependent claims.

### SUMMARY OF THE DISCLOSURE

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

In certain non-limiting independent examples, an exercise machine is configured for an exercise motion, and the exercise machine includes an input module configured to receive an input from a user. The input module includes a sensor configured to sense strain forces caused when the user engages the input module and to generate a signal corresponding to the sensed strain forces. A control system is configured to control the exercise machine based on the sensed strain forces. The input module includes a light guide board to which the sensor is coupled, and the sensor is configured to sense strain forces in the light guide board as the user engages the input module.

Optionally, the exercise machine comprises a stationary bicycle or an elliptical machine. Optionally, a resistance device controls a resistance for performing the exercise motion and the control system is operatively coupled to the resistance device and configured to receive a resistance setting for controlling the resistance from the user via the input module and to control the resistance device based on the resistance setting. Optionally, the input module includes an overlay layer coupled to the light guide board and defining an input zone which is configured to be engaged by the user and the sensor is configured to sense the strain forces in the light guide board as the user engages the input zone. Optionally, the input zone is one of a plurality of input zones defined by the overlay layer and the sensor is one of a plurality of sensors which are each coupled to the light guide board. Optionally, each sensor in the plurality of sensors corresponds to one input zone in the plurality of input zones such that each sensor is configured to sense the engagement of one input zone in the plurality of input zones. Optionally, the light guide board includes a printed circuit board assembly to which the sensor is coupled and a light is coupled and a light guide assembly configured to diffuse light emitted by the light. Optionally, the input module further includes an overlay layer coupled to the light guide board and defining an input zone which is configured to be engaged by the user, the sensor is configured to sense the strain forces in the light guide board as the user engages the input zone and the light diffused by the light guide assembly propagates through the overlay layer. Optionally, the light guide assembly defines a cutout in which the light is received. Optionally, the light is one of a plurality of lights coupled to the printed circuit board assembly and the light guide assembly includes a plurality of light guides configured to diffuse light emitted by the plurality of lights and one or more barrier members that isolate each light guide in the plurality of light guides from each other, the barrier members being configured to prevent light diffused by one light guide in the plurality of light guides from propagating into another light guide in the plurality of light guides. Optionally, the light guide assembly includes a diffusion layer configured to diffuse light propagating from the plurality of light guides. Optionally, a frame is configured to support the user and a stiffening plate coupled to the frame and configured to isolate the light guide board from the frame thereby preventing non-input-zone-engagement forces applied to the frame from straining the light guide board.

Various other features, objects, and advantages will be made apparent from the following description taken together with the drawings.

### BRIEF DESCRIPTION OF THE DRAWINGS

The present disclosure is described with reference to the following Figures. The same numbers are used throughout the Figures to reference like features and like components.
Fig. 1 is a perspective view of an example exercise machine with an input module according to the present disclosure.
Fig. 2 is a partial perspective view of another exercise machine with an input module according to the present disclosure.
Fig. 3 is a view like Fig. 2 with a shroud decoupled from a frame and excluding a sensor assembly.
Fig. 4 is a perspective view of an example input module according to the present disclosure.
Fig. 5 is an exploded view of the example input module of Fig. 4.
Fig. 6 is a view like Fig. 5.
Fig. 7 is an enlarged exploded view of the example input module of Fig. 4
Fig. 8 is a perspective view of the input module of Fig. 4 without an overlay layer.
Fig. 9 is an enlarged perspective view of the input module of Fig. 4 without an overlay layer.
Fig. 10 is a perspective view of an underside of an example shroud and a bottom of a light guide board according to the present disclosure.
Fig. 11 is another perspective view of the underside of the example shroud and the light guide board of Fig. 10 with the light guide board and the overlay layer as semi-transparent.
Fig. 12 is an exploded view of an example light guide assembly according to the present disclosure.
Fig. 13 is a perspective view of an example exercise machine with a shroud of an example input module removed.
Fig. 14 is a perspective view of the underside of an example input module that would couple to the exercise machine depicted in Fig. 13.
Fig. 15 is a front view of an example input module with three input zones and another example input module with six input zones.
Figs. 16-20 are various views of other example sensor assemblies according to the present disclosure.
Fig. 21 is a schematic diagram of an example control system according to the present disclosure.
Figs. 22-23 are schematic diagrams of example control systems according to the present disclosure.
Fig. 24 is a flow chart for an example method according to the present disclosure.

### DETAILED DESCRIPTION

The present inventors identified problems with conventional fitness or exercise machines presently known in the art, and particularly with conventional input devices used to control the operation of such exercise machines. Known conventional input devices used to control exercise machines include but are not limited to pushbutton switches, capacitive touch switches, sliding switches, selector switches (e.g., rotary knobs or levers having multiple positions), paddles (e.g., limit switches), and/or other switch mechanisms. In the example of an elliptical machine, input devices are conventionally used to adjust the resistance experienced and/or toggle electronic exercise settings. Other uses of conventional input devices for exercise machines include those for adjusting the resistance, incline, and/or stride length of a rowing device, treadmill, stair climber, cross trainer, elliptical machine, or upright or recumbent stationary bicycles, for example. It should be recognized that these are merely examples and that other features of exercise machines known in the art may also be adjustable by input devices.

The present inventors recognized that, particularly for exercise machines, conventional input devices tend to break or otherwise fail and in particular are susceptible to liquid (e.g. beverages, cleaning substances, water, and/or sweat) during operation as a result of high use and/or operation while the user is in motion. For instance, some conventional input devices known in the art have moving parts, seams, and other joints and thus have an inherently limited lifespan. This is further exacerbated for conventional input devices of exercise machines used within a commercial context (e.g., at a fitness center), which are exposed to greater usage and, consequently, greater wear and tear and false activations. Similarly, the present inventors identified that any ingress of water, sweat, and/or dirt may cause moving or abutting parts of conventional input devices (and/or any internal electrical components contained therein) to fail, thereby causing the input devices to malfunction. Replacing these conventional input devices is typically expensive and requires installation by a technician rather than the owner of the exercise machine, adding further expense and longer downtime. Certain conventional input devices may be combined with or embedded in other components (e.g., a panel of inseparable input devices) such that the failed input device may not be replaced without replacing the entire component.

Through experimentation and development, the present inventors invented the presently disclosed novel input modules having force-sensitive components which solve, or at least reduce, the severity of one or more of the problems associated with conventional input devices described above.

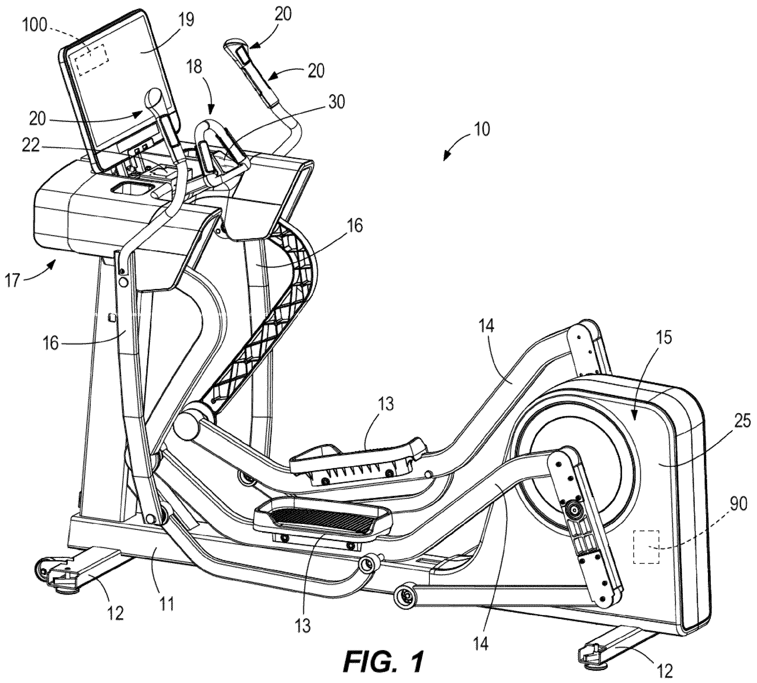

Fig. 1 depicts an example exercise machine 10 comprising an elliptical machine, which is similar to those presently known in the art, but which incorporates one or more input modules 30 according to the present disclosure. The exercise machine 10 is configured to permit a user to perform an exercise motion(s). The exercise machine 10 has a frame 11 which supports components of the exercise machine 10 (described hereinbelow) and further supports a user thereon. One or more ground-engaging wheels and/or feet 12 are coupled to the frame 11 and are configured to prevent tipping of the exercise machine 10. In use, the user stands on pedals 13 that are connected to elongated leg members 14 and moveable to thereby rotate a crank assembly 15. Arm members 16 are pivotably coupled to the leg members 14, and the user grasps the arm members 16 during operation. As such, the user can apply forces (e.g., pushing or pulling forces) to the arm members 16 and/or the leg members 14 with their arms and legs, respectively, to thereby turn the crank assembly 15 and exercise.

A resistance device 90 is coupled to the crank assembly 15 and contained within a housing 25. The resistance device 90 is configured to resist the rotation of a crankshaft about an axis (not depicted) within the crank assembly 15 and thereby control resistance for performing the exercise motion. The resistance device 90 can for example include an Eddy or magnetic or frictional braking device and/or the like. The user can adjust the resistance device 90 via a display interface 19 and/or the input assemblies 20 by adjusting a resistance setting to thereby vary the resistance applied by the resistance device 90. The display interface 19 may be a capacitive touchscreen display or LED display panel. The display interface 19 can include mechanical and/or tactile push buttons.

The display interface 19 is mounted to and extends generally upwardly from a bridge 17 which is coupled to the frame 11. The arm members 16 are also pivotally coupled to the bridge 17. The bridge 17 can include one or more cup holders and trays that hold the personal items of the user. Optionally, the bridge 17 supports a handle 18 which may be selectively grasped by the user and the input module 30 is positioned within a space at least partially defined by the handle 18. The input module 30 is configured to face the user on the exercise machine 10 and has one or more input buttons or zones 31 for receiving or adjusting operational settings of the exercise machine 10 such as resistance settings and/or incline settings. The handle 18 can optionally include one or more sensors (e.g., heart rate sensor and/or the like) that provide user feedback signals to a control system 100. Note that the control system 100 is schematically depicted as part of the display interface 19. The control system 100 processes the feedback signals to thereby display information to the user, customize the exercise program, adjust the incline of the leg members 14, and/or adjust the resistance applied by the resistance device 90.

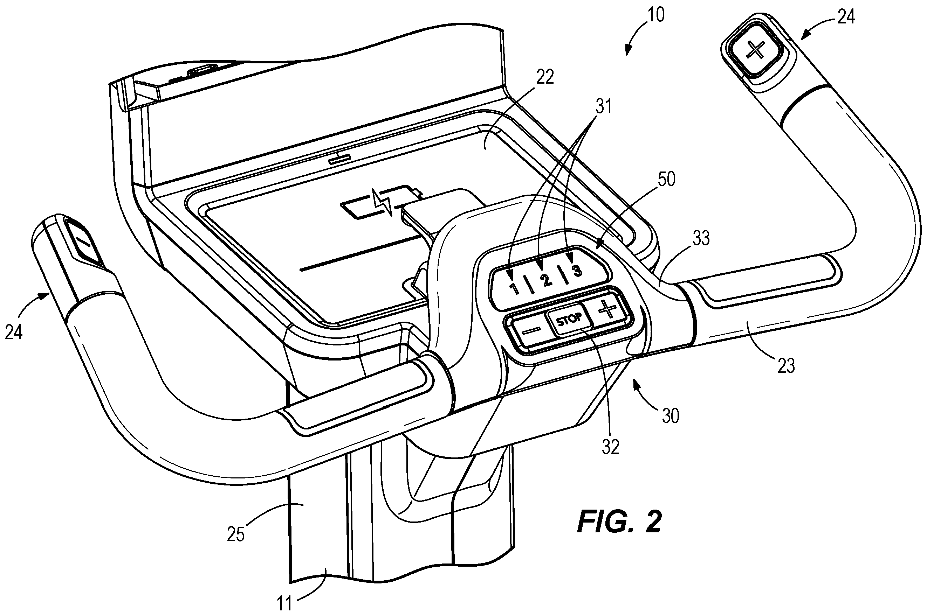

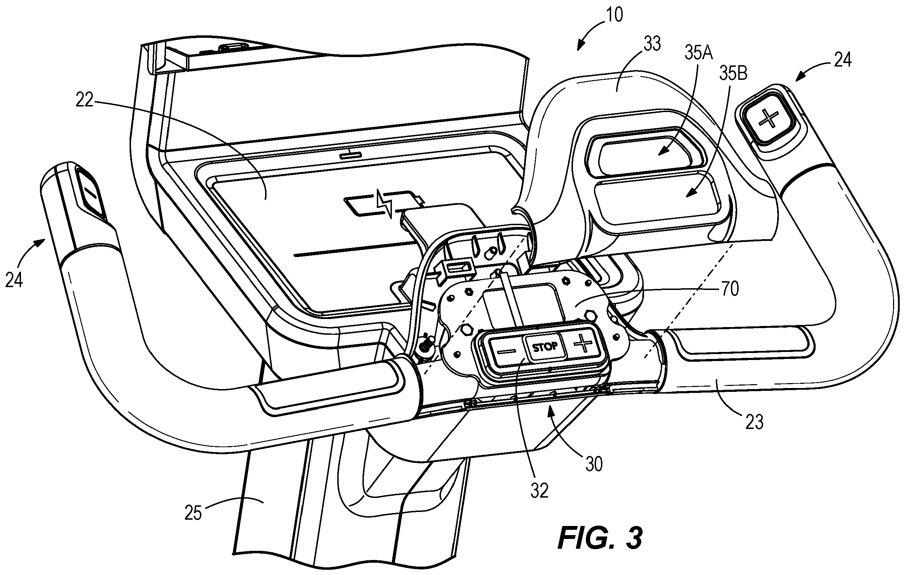

Turning now to Figs. 2-3, an enlarged view of another example exercise machine 10, which in this depicted example is an upright stationary bicycle, and the exercise machine 10 includes an example input module 30 according to this present disclosure. Note that each example exercise machine 10 of the present disclosure can include one or more features and/or components of other example exercise machines 10 (or portions of the exercise machines 10) described herein. For example, the example exercise machine 10 depicted in Fig. 2 can include one or more features and/or components of the exercise machine 10 described with reference to Fig. 1. In another example, the exercise machine 10 depicted in Fig. 1 can include one or more features and/or components of the exercise machine 10 described with reference to Fig. 2. Further note that similar components indicated in Figures may be same denoted with the same part numbers, however, it should be understood that the use of the same part numbers for features and/or components of the various examples of the present disclosure should not be construed to indicate that the similarly marked features and/or components are necessarily identical. The similarly marked features and/or components may have varying characteristics. For instance, the frame 11 of Fig. 2 may include a seat post which is not included with the frame 11 depicted in Fig. 1.

The exercise machine 10 includes a frame 11 having a seat post (not depicted) that supports a seat on which the user sits (not depicted), pedals that turn a crank assembly (not depicted), a display interface (not depicted), a tray 22 on which the user may position personal items, and a handlebar 23 which can be optionally grasped by the user. The handlebar 23 includes a plurality of sensors/input devices 24, and the input module 30 is located adjacent to the center section of the handlebar 23. Note that although the example input module 30 according to the present disclosure is depicted on an exercise machine 10 that is an upright stationary bicycle, the input module 30 can be utilized on other exercise machines 10 such as an elliptical machine, rowing devices, treadmills, stair climbers, recumbent stationary bicycles, and the like.

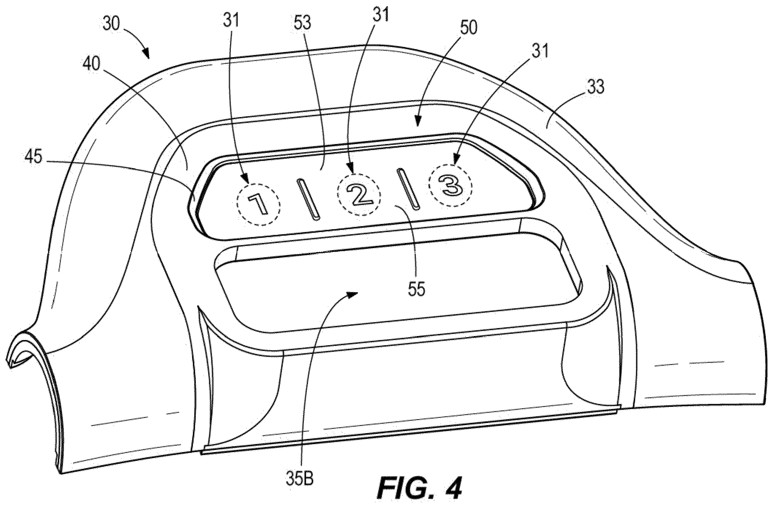

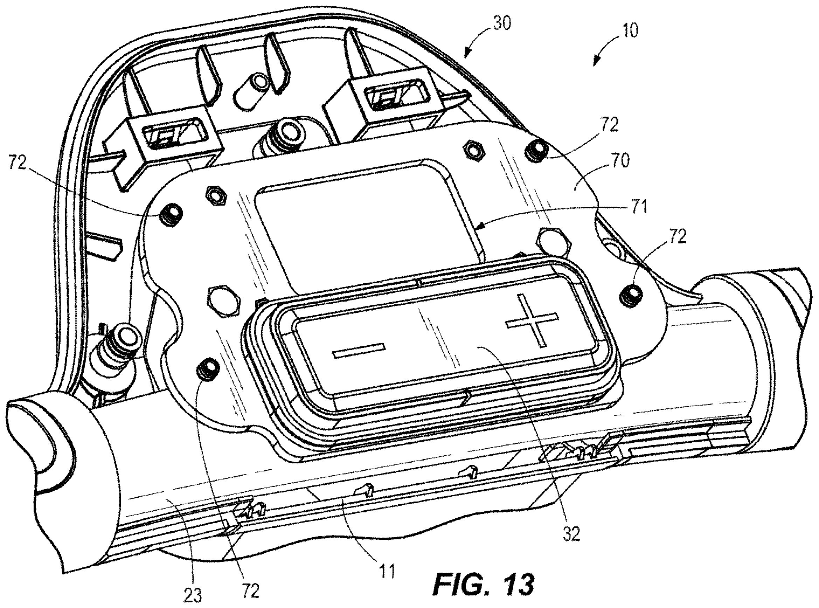

Generally, the input module 30 is oriented towards and/or faces the user and includes one or more input buttons or zones 31 of a force-sensitive sensor assembly 50 (described further herein) that the user may engage. Based on the user's engagement with the sensor assembly 50, the input module 30 provides one or more signals (e.g., control signals) to the control system 100 which may in turn adjust the operation of the exercise machine 10 (e.g., adjust resistance and/or incline), display information to the user, customize the exercise program, and the like. As depicted in Fig. 2, the sensor assembly 50 with three input zones 31 (see also Fig. 4) and an input switch 32, both of which are surrounded by a shroud 33. During normal operation of the exercise machine 10, the shroud 33 is firmly secured to the frame 11 via a stiffening plate 70 (described further herein; see also Fig. 13) and/or the handlebar 23. However, during assembly and/or maintenance of the exercise machine 10, the shroud 33 can be decoupled from the handlebar 23 and/or the frame 11.

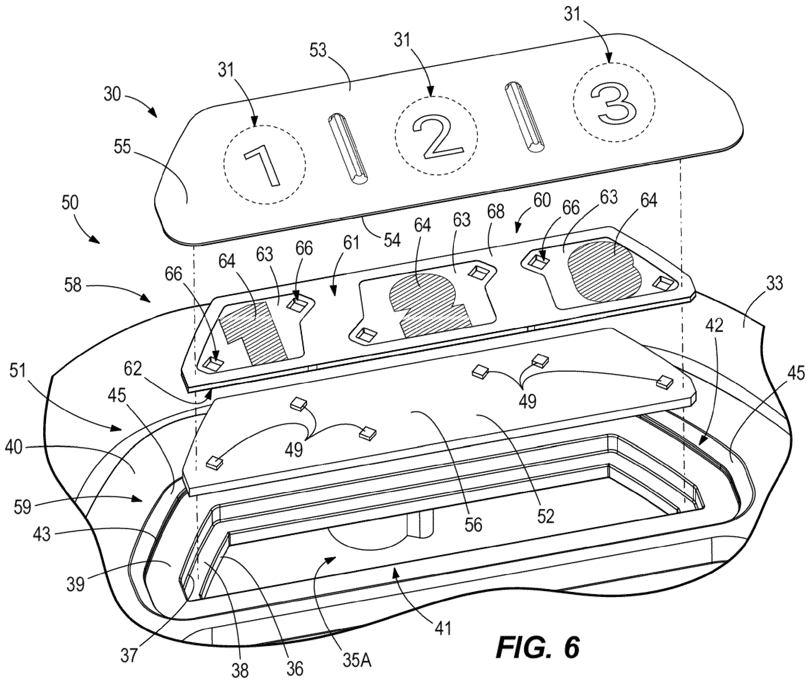

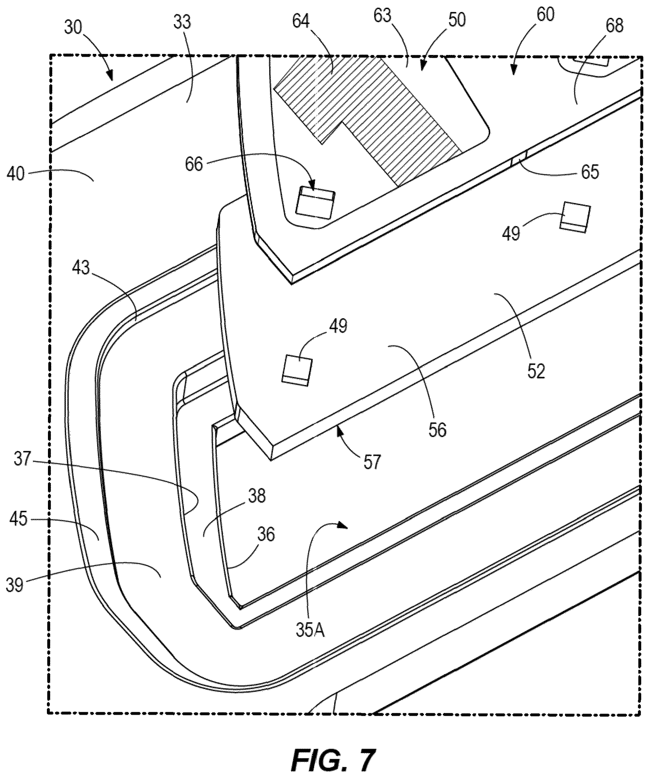

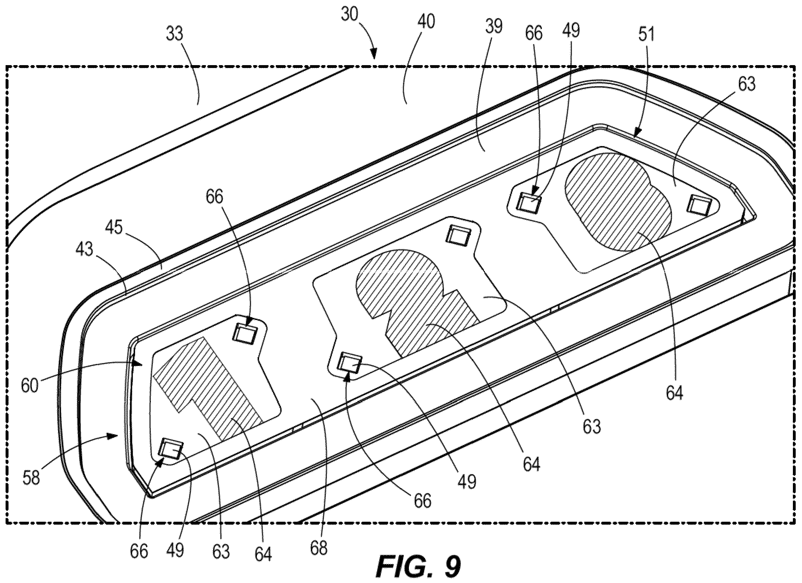

Figs. 4-9 depict the shroud 33, the sensor assembly 50, and other components of the input module 30 in greater detail. Referring specifically to Figs. 4-6, the shroud 33 includes a first opening 35A and a second opening 35B (Fig. 4), and the sensor assembly 50 is received into the first opening 35A and the input switch 32 (Fig. 2) is received into the second opening 35B. The first opening 35A is partially defined by a lip 36 (Fig. 6) that extends inwardly from an inner perimeter surface 37 of the shroud 33, and the lip 36 has an upper lip surface 38. The shroud 33 also includes a first surface 39 that surrounds the opening 35A, and the first surface 39 lies in a plane that is parallel and offset from another plane in which the lip surface 38 lies. In certain examples, the lip surface 38 is below the first surface 39. A second surface 40 surrounds the first surface 39, and a transition surface 43 (Fig. 6) extends between the first surface 39 and the second surface 40. The transition surface 43 extends perpendicular to the first and second surfaces 39, 40. Note that Fig. 7 depicts that the second surface 40 has a round edge 45 that is adjacent to the transition surface 43. A lower first side 41 (Fig. 6) of the opening 35A permits passage of cables therethrough to the sensor assembly 50. The user engages the sensor assembly 50 from an upper second side 42 (Fig. 6) of the opening 35A which is opposite the first side 41.

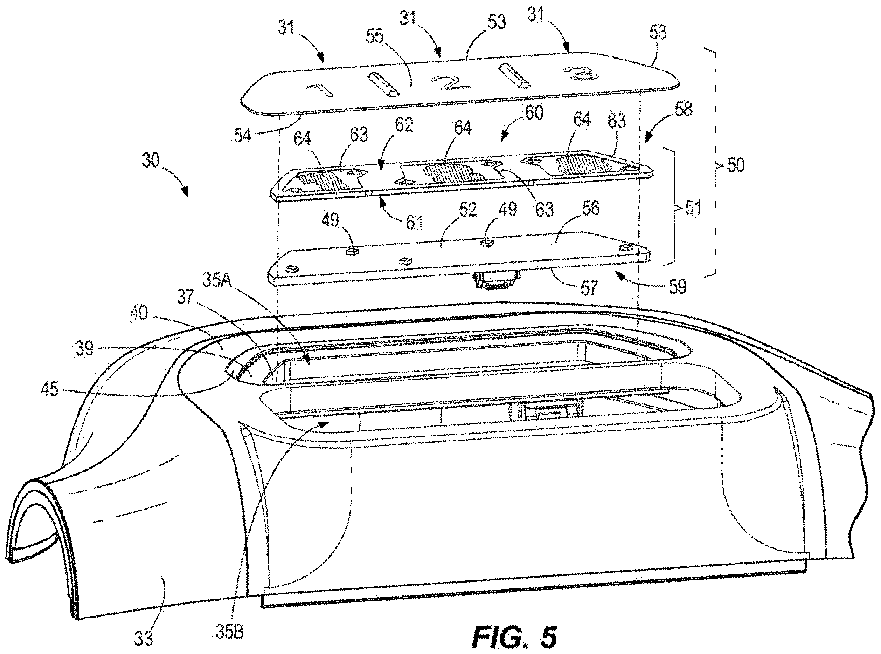

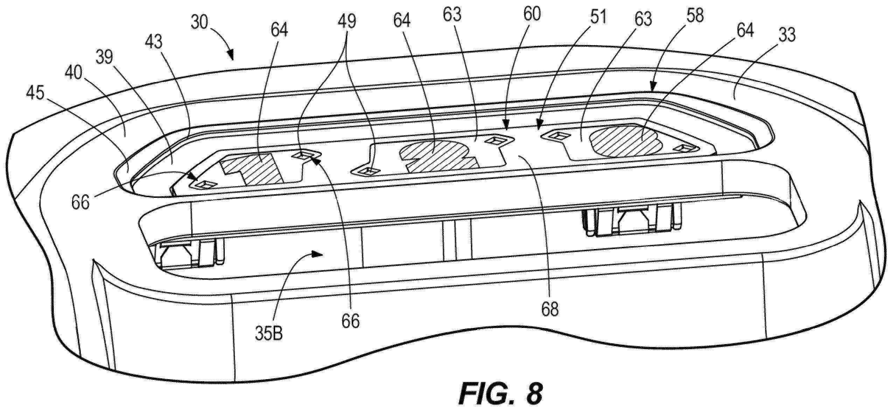

The sensor assembly 50 is depicted in Figs. 5-7 as exploded to thereby depict placement of the sensor assembly 50 relative to the shroud 33. Generally, the sensor assembly 50 includes an overlay layer 53 and a light guide board 51 (described further herein). When the sensor assembly 50 is in the opening 35A, a bottom 59 of the light guide board 51 rests on the lip surface 38. In certain examples, when the light guide board 51 rests on the lip surface 38, a top 58 of the light guide board 51 is flush with the first surface 39 of the shroud 33 (see Figs. 8-9). An adhesive or adhesive layer (not depicted) may adhere the light guide board 51 to the lip surface 38. Once the light guide board 51 is properly positioned in the first opening 35A (as described above) the overlay layer 53 is coupled to the top 58 of the light guide board 51 and the first surface 39 of the shroud 33 (see Fig. 6 and Fig. 4). As such, the overlay layer 53 generally lies in a plane and provides a generally smooth top surface 55 of the overlay layer 53.

The overlay layer 53 is formed of any suitable materials (e.g., a plastic, polyester, glass, glass and polycarbonate material) and painted such that indicia (e.g., numbers "1,", "2", "3") are visible on the top surface 55 of the overlay layer 53. In one example, the indicia are painted white while the remainder of the outside of the overlay layer 53 is painted black. In this example, the indicia are at least semitransparent and thus permit light from the light guide board 51 to shine therethrough (described further herein). Note in certain examples the underside of the overlay layer 53 is painted white to increase reflection of light emitted by one or more lights 49 (Fig. 7) such as single color or RGB light emitting diodes (LEDs) or the like.

The input zones 31 of the input module 30 is generally defined as areas of the top surface 55 around each indicia, e.g., see dash lines on Fig. 4 which schematically depict the input zone 31 on the top surface 55 around each of the numerals "1", "2", and "3". The overlay layer 53 includes a perimeter lip 54 (Fig. 6) that transversely (e.g., perpendicularly) extends away from the top surface 55. The perimeter lip 54 is adhered to the transition surface 43 of the shroud 33 to thereby form a fluid-tight seal between the transition surface 43 and the overlay layer 53 that prevents debris and/or fluids from entering the opening 35A. In addition, perimeter lip 54 acts to block light that may otherwise leak out via the seam between the overlay layer 53 and the transition surface 43.

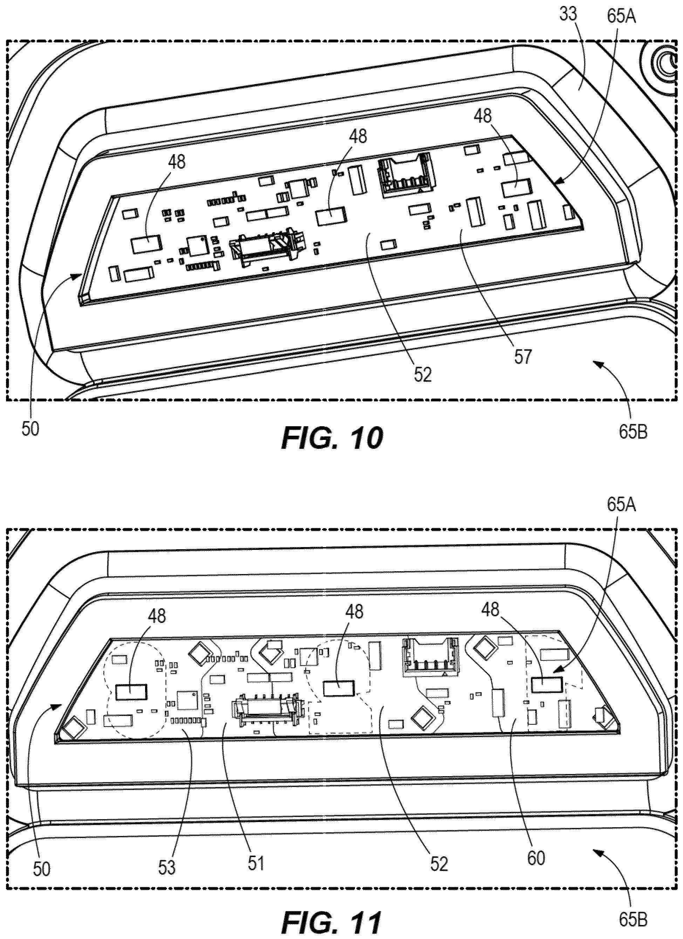

The light guide board 51 includes a printed circuit board assembly (PCBA) 52 and a light guide assembly 60. The PCBA 52 has a top surface 56 to which the one or more lights 49 are coupled and the lights 49 extend from the top surface 56. The lights 49 are configured to emit light, and the top surface 56 is preferably reflective and/or painted white to thereby reflect light emitted by the lights 49. The PCBA 52 also includes an opposite bottom surface 57 to which electrical components, such as capacitors, inductors, resistors, diodes, sensors, and transistors, are coupled. Note that Fig. 10 depicts the underside of the shroud 33 with the bottom surface 57 of the PCBA 52 visible via the opening 35A. The PCBA 52 includes a sensor 48 (Figs. 10-11) for each input zone 31 of the input module 30 (see Fig. 4), and Fig. 11 depicts the PCBA 52, the light guide assembly 60, and the overlay layer 53 as transparent to thereby exemplarily depict that each sensor 48 can be aligned with one of the input zones (Fig. 4) and corresponding indicia. The sensor 48 is configured to sense strain forces acting on one or more components of the input module 30 such as the PCBA 52. For example, the sensor 48 is capable of sensing strain forces in the PCBA 52 that are caused when the user applies a force to one or more of the input zones 31 (Fig. 4). The overlay layer 53, the light guide assembly 60, and the PCBA 52 (see Fig. 5) are coupled together such that a force applied by the user to one of the input zones 31 of the overlay layer 53 is transferred to the PCBA 52 and thus the PCBA 52 flexes or deforms due to the force applied to the input zone 31. The flexing or deformation of the PCBA 52 results in strain forces in the PCBA that are sensed by the sensor 48. The sensor 48 generates analog signals which control system 200 analyzes and/or calculates the corresponding sensed strain forces. Note that in certain examples, the sensor 48 generates digital signals. The signal(s) corresponding the sensed strain force(s) are communicated to the control system 100 (Fig. 1). Further description of the sensor 48 and the control system 100 are provided below. The sensor 48 can be any suitable sensor 48 capable of sensing flexing or deformation of the PCBA 52 and/or sensing strain forces in the PCBA 52. In one non-limiting example, the sensor 48 is a piezoresistive sensor or piezoresistive pressure sensor. In one non-limiting example, the sensor 48 is a commercially and publicly available piezo-resistive sensor manufactured by New Degree Technology (part number: MSK10-P6 or MSK10-P8).

As noted above, the light guide assembly 60 is coupled to the top surface 56 of the PCBA 52 (see Fig. 5), and the light guide assembly 60 is for diffusing the light emitted by the lights 49 such that the light evenly illuminates the overlay layer 53 and/or the indicia of the overlay layer 53. That is, light emitted by the lights 49 is received into the light guide assembly 60 which diffuses the light and permits the light to pass in a direction toward the overlay layer 53 thereby evenly illuminating the indicia defined by the overlay layer 53 (see Fig. 4) and reducing or eliminating bright spots of light or uneven light intensity illuminating the overlay layer 53 and/or the indicia.

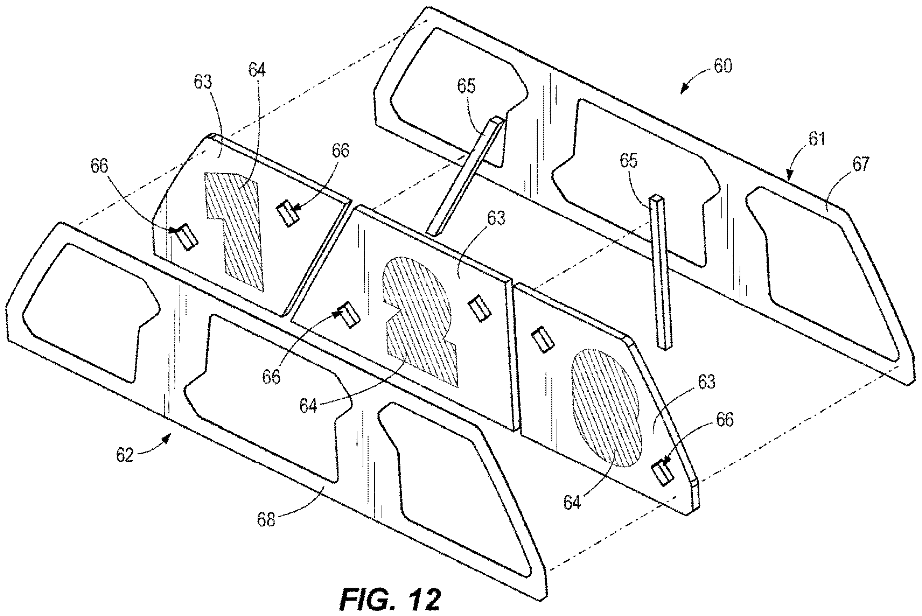

Fig. 12 depicts an exploded view of the example light guide assembly 60 in greater detail. The light guide assembly 60 has a first side 61, an opposite second side 62, and a plurality of light guides 63. In certain examples, the number of light guides 63 corresponds to the number of input zones 31 (Fig. 4) of the input module 30 (e.g., three light guides 63 for three input zones 31). Each light guide 63 is formed of suitable transparent or translucent material such as plastic, glass, and the like, and each light guide 63 has a material thickness through which the light propagates. In certain examples, each light guide 63 includes at least one cutout 66 in which a light 49 is received (see Fig. 7). As such, the light emitted by the light 49 passes into the light guide 63 and the light guide 63 diffuses the light. In certain examples, a diffusion layer 64 is coupled to the light guides 63 and is configured to further diffuse the light as the light propagates out of the light guides 63 toward the indicia of the overlay layer 53. In certain examples, the diffusion layer 64 includes a diffusing material that is painted or sprayed onto the light guides 63. In other examples, the diffusion layer 64 comprises the top surface of the light guides 63 and the top surfaces are etched (e.g., laser etching) to thereby 'roughen up' the top surface and promote diffusion of the light. The present inventors discovered that the light guides 63 and/or the diffusion layers 64 advantageously diffuse the light from the lights 49. As such, the sensor assembly 50 is configured to evenly illuminate the indicia in the overlay layer 53 (Fig. 4) thereby aesthetically illuminating the indica without 'hot-spots', grit effects, and/or uneven illumination, that are common with conventional devices, such as membrane switches.

The light guide assembly 60 includes barrier members 65 that extend between adjacent light guides 63 to thereby physically isolate the light guides 63 from each other and prevent light diffused by one light guide 63 from propagating into another light guide 63. The barrier members 65 are preferably formed by a black-colored foam. The barrier members 65 and the light guides 63 are coupled together by a pair of adhesive layers, namely a first adhesive layer 67 and a second adhesive layer 68. The first adhesive layer 67 can also adhere the first side 61 of the light guide assembly 60 to the top surface 56 of the PCBA (Fig. 5), and the second adhesive layer 68 can also adhere the second side 62 of the light guide assembly 60 to the overlay layer 53.

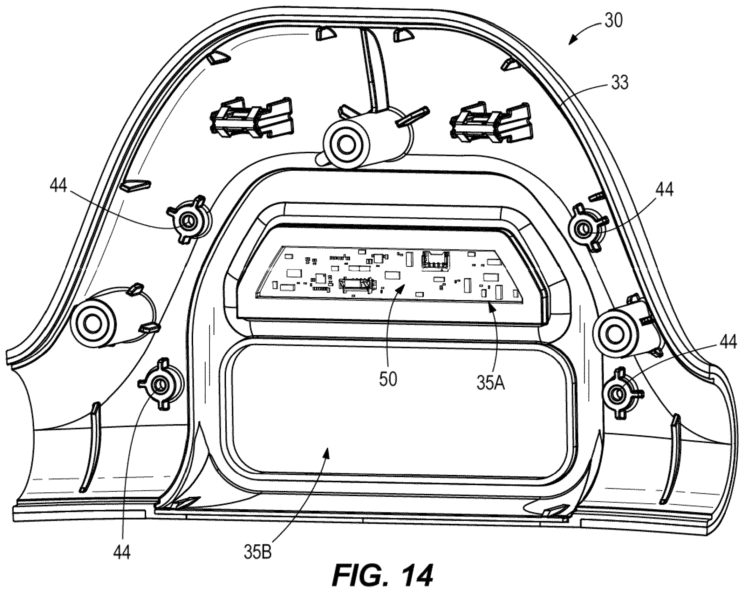

Turning now to Figs. 13-14, the input module 30 and the shroud 33 is depicted as removed from the exercise machine 10 to thereby expose a stiffening plate 70 coupled to the frame 11 of the exercise machine 10. Note that in this example the sensor assembly 50 is transparently depicted coupled to the shroud 33 and the input switch 32 is depicted coupled to the stiffening plate 70. The present inventors recognized that the user of the exercise machine 10 may grasp the sides of the shroud 33 (Fig. 2) and further apply forces (e.g., twisting forces) thereto. These forces may affect the strain sensed by the sensors 48 (Fig. 10) and cause the sensors 48 to produce false signals that the user engaged one or more input zones 31 (Fig. 4). As such, the present inventors endeavored to prevent non-input-zone-engagement forces, which are forces applied to the exercise machine 10 and/or the input module 30 which are not forces directed to by the user to engage the input zones 31 (e.g., twisting forces on the shroud 33 caused when the user grips the handlebar 23, rocking forces applied to the exercise machine 10 when the user performs the exercise motion), from being sensed by the sensors 48. The present inventors developed the stiffening plate 70 which reduces or prevents non-input-zone-engagement forces from being sensed by the sensors 48. The stiffening plate 70 isolates the sensor assembly 50 from the shroud 33 and the frame 11. The stiffening plate 70 is securely coupled to the frame 11 and/or the handlebar 23, and the stiffening plate 70 includes a passage 71 through which wires pass to the sensor assembly 50 (Fig. 14). The shroud 33 includes one or more first mounting devices 44 (e.g., screws, threaded holes) that mount to corresponding second mounting devices 72 (e.g., screws, threaded holes) on the stiffening plate 70. As such, non-input-zone-engagement forces applied to the shroud 33 are transferred via the mounting devices 44, 72 to the stiffening plate 70 thereby isolating the sensor assembly 50 from certain non-input-zone-engagement forces and preventing the sensors 48 (Fig. 10) from generating false signals caused by the user engaging the shroud 33.

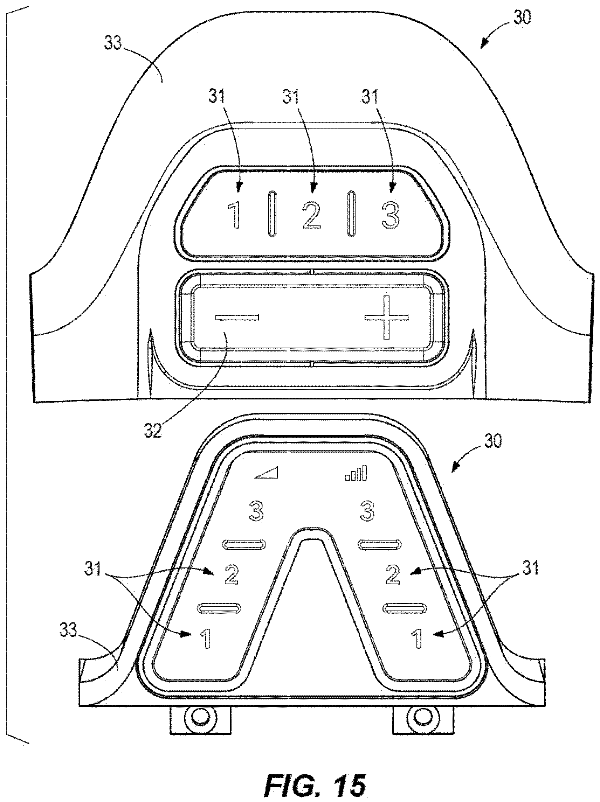

Fig. 15 includes an example input module 30 with three input zones 31 and another example input module 30 with six input zones 31. The input module 30 with six input zones 31 can include multiple components and features that are described with reference to the three-zone input module 30 depicted in Figs. 2-14. In the example depicted in Fig. 15, the input module 30 with six input zones 31 has three input zones 31 for adjusting the incline of the exercise machine 10 (Fig. 1) and three input zones 31 for adjusting the resistance of the exercise machine 10 (Fig. 1).

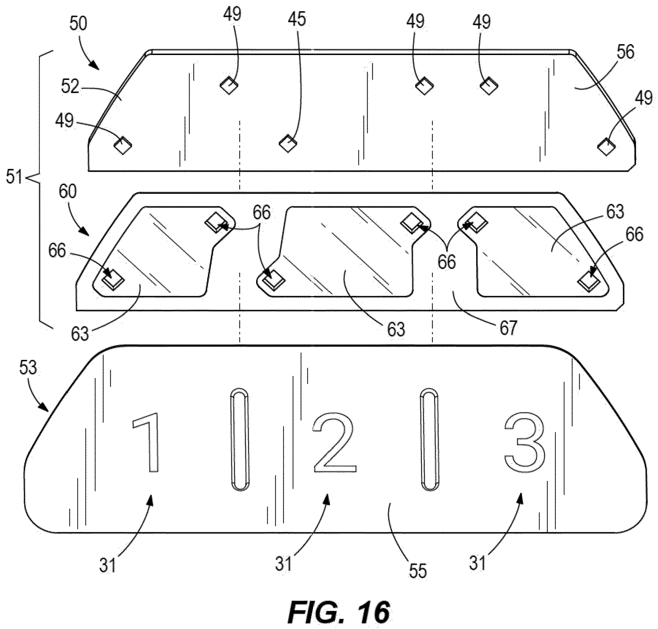

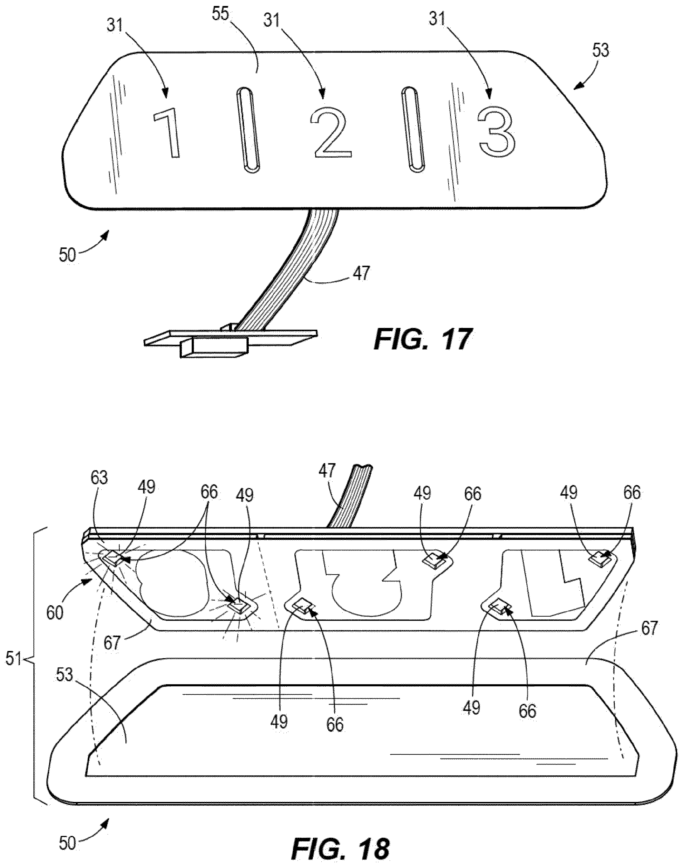

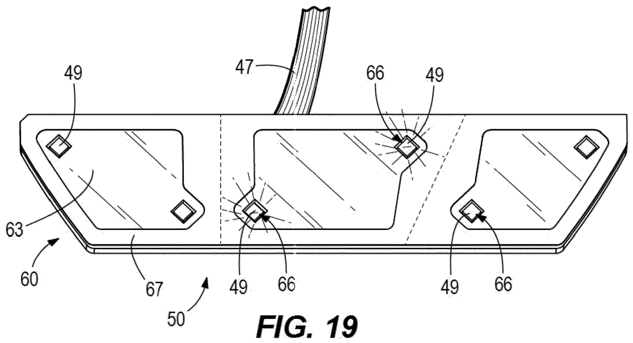

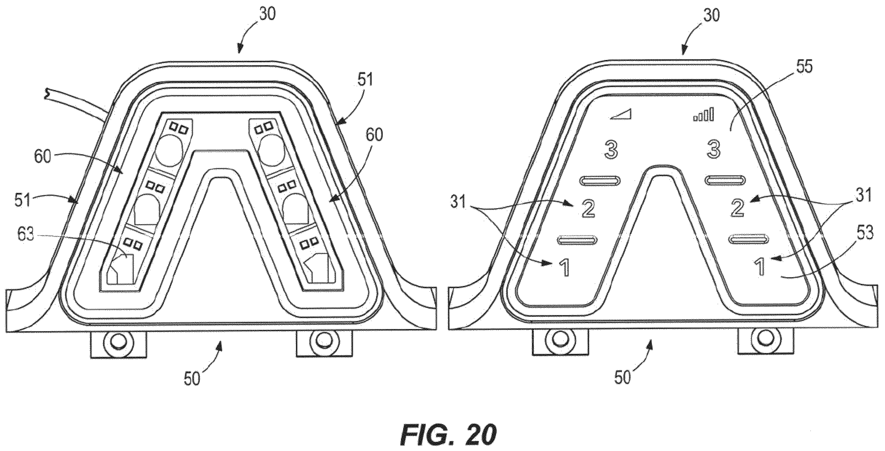

Figs. 16-20 depict other example sensor assemblies 50 according to the present disclosure. Figs. 17-18 depict an electronic communication tail 47 coupled to the bottom surface 57 of the PCBA 52 (Fig. 10) to thereby electronically couple the PCBA 52 to the control system 100 (Fig. 1).

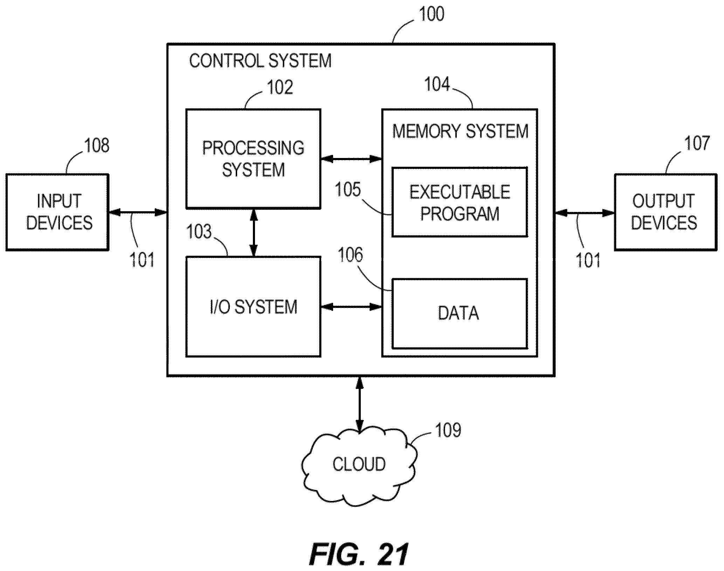

Fig. 21 depicts an example control system 100 for controlling and adjusting operation of the exercise machine 10. As noted above, the user may control and adjust operation of the exercise machine 10 (e.g., adjusting resistance) by providing user inputs to the display interface 19, the input devices 24, and/or the input module 30 (Fig. 1) which are communicated to the control system 100.

Certain aspects of the present disclosure are described or depicted as functional and/or logical block components or processing steps, which may be performed by any number of hardware, software, and/or firmware components configured to perform the specified functions. For example, certain embodiments employ integrated circuit components, such as memory elements, digital signal processing elements, logic elements, look-up tables, or the like, configured to carry out a variety of functions under the control of one or more processors or other control devices. The connections between functional and logical block components are merely exemplary, which may be direct or indirect, and may follow alternate pathways.

In certain examples, the control system 100 communicates with each of the one or more components of the exercise machine 10 via a communication link 101, which can be any wired or wireless link. The control system 100 is capable of receiving information and/or controlling one or more operational characteristics of the exercise machine 10 and its various sub-systems by sending and receiving control signals via the communication links 101. In one example, the communication link 101 is a controller area network (CAN) bus (e.g., I2C serial communication bus); however, other types of links could be used. It will be recognized that the extent of connections and the communication links 101 may in fact be one or more shared connections, or links, among some or all of the components in the exercise machine 10. Moreover, the communication link 101 lines are meant only to demonstrate that the various control elements are capable of communicating with one another, and do not represent actual wiring connections between the various elements, nor do they represent the only paths of communication between the elements. Additionally, the exercise machine 10 may incorporate various types of communication devices and systems, and thus the illustrated communication links 101 may in fact represent various different types of wireless and/or wired data communication systems.

The control system 100 may be a computing system that includes a processing system 102, memory system 104, and input/output (I/O) system 103 for communicating with other devices, such as input devices 108 (e.g., the display interface 19, the input devices 24, and/or the input module 30) and output devices 107 (e.g., resistance device 90), either of which may also or alternatively be stored in a cloud 109. The processing system 102 loads and executes an executable program 105 from the memory system 104, accesses data 106 stored within the memory system 104, and directs the exercise machine 10 to operate as described in further detail below.

The processing system 102 may be implemented as a single microprocessor or other circuitry, or be distributed across multiple processing devices or sub-systems that cooperate to execute the executable program 105 from the memory system 104. Non-limiting examples of the processing system include general purpose central processing units, application specific processors, and logic devices.

The memory system 104 may comprise any storage media readable by the processing system 102 and capable of storing the executable program 105 and/or data 106. The memory system 104 may be implemented as a single storage device, or be distributed across multiple storage devices or sub-systems that cooperate to store computer readable instructions, data structures, program modules, or other data. The memory system 104 may include volatile and/or non-volatile systems, and may include removable and/or non-removable media implemented in any method or technology for storage of information. The storage media may include non-transitory and/or transitory storage media, including random access memory, read only memory, magnetic discs, optical discs, flash memory, virtual memory, and non-virtual memory, magnetic storage devices, or any other medium which can be used to store information and be accessed by an instruction execution system, for example.

In the example noted above, the sensors 48 are configured to sense strain forces in the PCBA 52 when the user presses the input zone(s) 31 on the overlay layer 53 (see Figs. 5 and 10). The sensor 48 then communicates a signal, through control system 200, to the control system 100 that corresponds to the strain force (e.g., grams of force experienced by the PCBA 52). Note that the signal may be an analog or a digital signal.

Note that in the examples described herein below, the signals from the sensors 48 are communicated to the control system 100 of the exercise machine 10 for processing, and the control system 100 of the exercise machine 10 further controls components of the exercise machine 10 and the sensor assembly 50 based on the signals. However, in other examples, the sensor assembly 50 includes a sub-control system or its own control system that processes the signals from the sensors 48 and then relays processed signals to the control system 100 of the exercise machine 10 for further processing, sending control signals to other components of the exercise machine 10 (e.g., resistance device), and/or sending control signals to other components of the sensor assembly 50 (e.g., the lights 49).

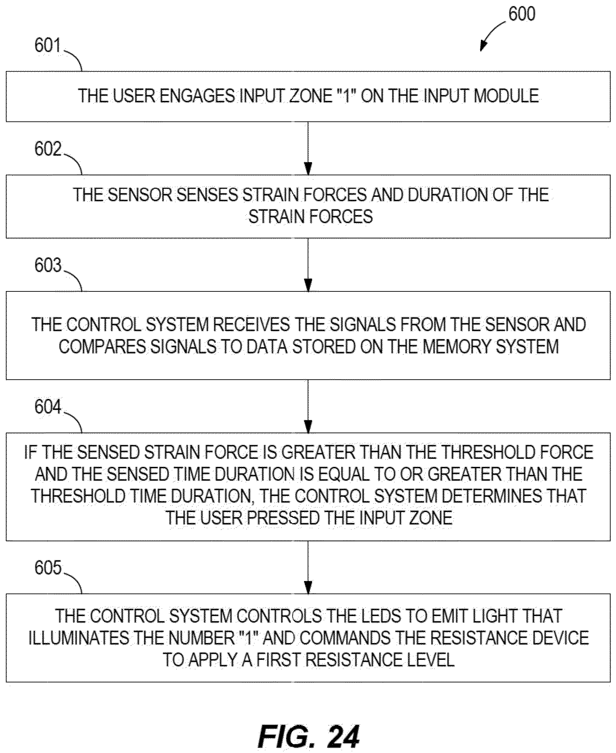

An example method 600 (see also Fig. 24) of operating the exercise machine 10 is described herein below including controlling the illumination of the lights 49 (Fig. 7) and/or the resistance applied by the resistance device 90 based on the input zone 31 (Fig. 4) engaged (e.g., pressed) by the user. At step 601, the user may wish to select a first resistance setting or level and therefore presses the input zone 31 containing the number "1". The sensor 48 aligned with the number "1" (see Fig. 11) senses strain forces caused when the user engages the corresponding input zone 31 (step 602). As such, the sensor 48 communicates signals or data corresponding to the sensed strain forces (e.g., grams of force) and/or a sensed time duration value (e.g., the length of time the sensor senses the sensed strain force value) to the control system 100. Note that in other examples, the control system 100 includes a timer such that the control system 100 is configured to determine the sensed time duration based on the signal from the sensor 48. At step 603, the control system 100 receives the signal or data and compares the sensed strain force and/or the sensed time duration to a predetermined threshold force (e.g., 300.0 grams of force) and/or a predetermined threshold time duration (e.g., 200.0 milliseconds), respectively. The predetermined threshold force and/or the predetermined threshold time duration can be stored in the memory system 104 such as in a lookup table. If the control system 100 determines, at step 604, that the sensed strain force is greater than the threshold force and the sensed time duration is equal to or greater than the threshold time duration, the control system 100 further determines that the strain forces sensed by the sensor 48 are a result of the user pressing the input zone 31 with the number "1". As such, at step 605 the control system 100 controls the LEDs to emit light that illuminates the number "1" and the controls and/or commands the resistance device 90 to apply a first resistance level.

In certain examples, if the control system 100 determines that the user pressed another input zone 31 (e.g., the input zone 31 corresponding with the number "2"), the control system 100 will turn off the lights 49 corresponding to other input zones 31, turn on the lights 49 corresponding with the input zone 31 that is pressed, and further change the resistance device 90 to apply the resistance setting corresponding with the input zone 31 that is pressed.

In certain examples, the control system 100 determines that the sensed time duration is less than the threshold time duration, the control system 100 determines that the input zone 31 has not been properly pressed (e.g., the input zone 31 was pushed too quickly or without enough duration, the input zone 31 was accidentally 'brushed' by the users arm) and thus will ignore the signal from the sensor 48 and take no action. In certain examples, if the sensed time duration value of the input zone 31 pressed by the user is within a predetermined time range (e.g., 3.0-5.0 seconds), the control system 100 will determine that the input zone 31 was pressed by the user to enter a programming mode of the control system 100 which allows the user to adjust the function of the input zone(s) 31. For instance, the user may press the input zone 31 corresponding with the number "3" for 3.0 or 4.0 seconds to thereby enter the programming mode and further set the resistance setting associated with the input zone 31 with the number "3" to the present resistance setting or to a maximum resistance setting or level. The programming mode may also permit the user to change the brightness or color of the light emitted by the lights 49, the brightness of the light emitted by the lights 49, and/or other functions of the exercise machine 10.

In certain examples, if the control system 100 determines that the sensed strain force is less than the threshold force, the control system 100 determines that the user did not press the input zone 31 and the sensed strain forces are a result of another object inadvertently pressing the input zone (e.g., a drop of sweat) or strain forces sensed by the sensor 48 which are caused when the user presses another input zone(s) 31 (e.g., more than one sensor 48 may sense strain forces in the PCBA 52 which may be caused when pressing one of the input zones 31). As such, the memory system 104 includes algorithms that facilitate analyzing the sensed strain forces from multiple sensors 48 such that the control system 100 can ignore certain signals and/or determine which input zone 31 was actually pressed by the user. For example, if the user presses the input zone 31 with the number "2", the sensor 48 directly below the input zone 31 with the number "2" will sense a higher strain force (e.g., 400.0 grams) than the sensors 48 below other input zones 31 (e.g., the sensors 48 sense 250.00 grams). In this example, the control system 100 will determine that the input zone 31 with the number "2" was pressed and ignore the signals from the other sensors 48 because the sensed strain force value of the sensor 48 below the input zone 31 with the number "2" is greater than the threshold force and the sensed strain force from the other sensors 48 are less than the sensed strain force value from the sensor 48 below the input zone 31 with the number "2".

In another example, if the user presses between the input zone 31 with the number "2" and the input zone 31 with the number "3" both sensors 48 below these input zones 31 may sense a similar strain force. In this example, the control system 100 will determine that a single input zone 31 was not properly pressed and thus, because the sensed strain force values are not adequately separated from each other the control system 100 will ignore the signal and take no action.

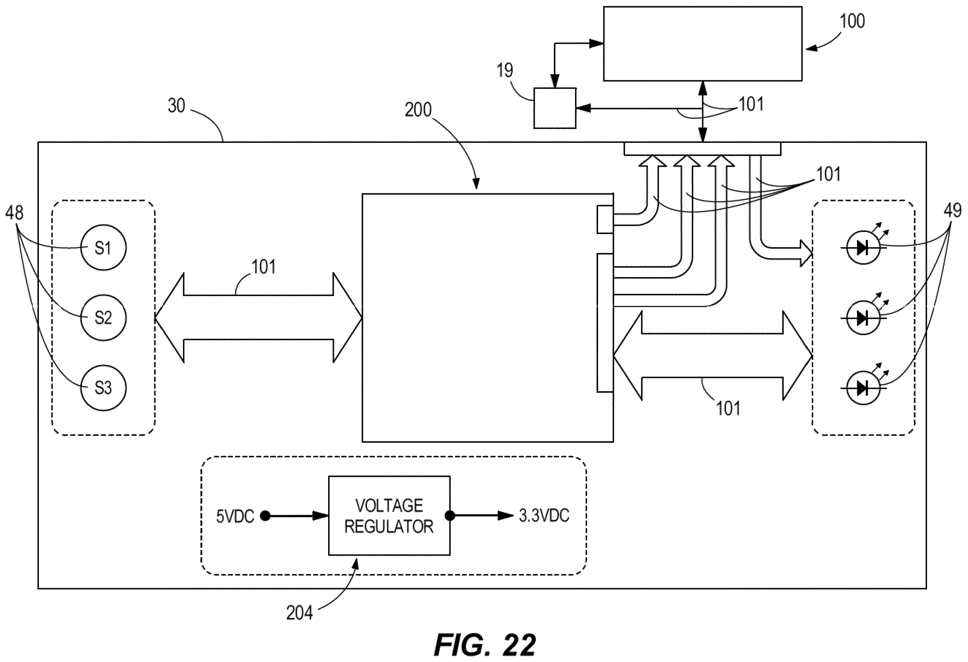

Figs. 22-23 are schematic diagrams of example control systems 100 of the present disclosure. In these examples, the input module 30 includes a separate control system 200 that communicates with the control system 100 of the exercise machine 10 (Fig. 4), the sensors 48, and the lights 49. Note that the control system 200 can be similar to the control system 100 described above and include similar components and/or features. The control system 200 can include a microprocessor.

Fig. 22 depicts the input module 30 with three sensors 48 and three lights 49 for three corresponding input zones 31 (see for example Figs. 5-6). The sensors 48 are in communication via communication links 101 with the control system 200. The control system 200 can include a microprocessor (uP). In certain examples, the sensors 48 provide an analog input signal to the control system 200.

Several communication links 101 extend from the control system 200 to various components of the exercise machine 10. For example, the control system 100, the control system 200, and/or the display interface 19 are in communication via one or more communication links 101. The control system 100 can be configured to provide interrupt signals to various components of the exercise machine 10 based on input signals received by the control system 200. For example, events that lead to an interrupt signal include users presses an input zone 31, the sensors 48 sense a user pressing one of the input zones 31, INT flags the control system 100, and/or the control system 100 receives data packets (e.g., the user inputs data via the display interface 19). The control system 200 can be configured to operate in the background during operation of the exercise machine 10 and only communicate with the control system 100 when necessary. The control system 200 can facilitate brightness adjustment of the lights 49 (see Fig. 6) based on inputs received from the user via the display interface 19. The control system 100 can also enable 'reset' of the processing system of the input module 30 and/or the control system 100 in the event that the display interface 19 'freezes' or 'locks up'. The control system 200 is also permitted to selectively turn on or off the lights 49 based on input received into the control system 200 and/or the control system 100. The input module 30 includes a voltage regulator 204 (see Fig. 22) that converts input voltage to the appropriate voltage.

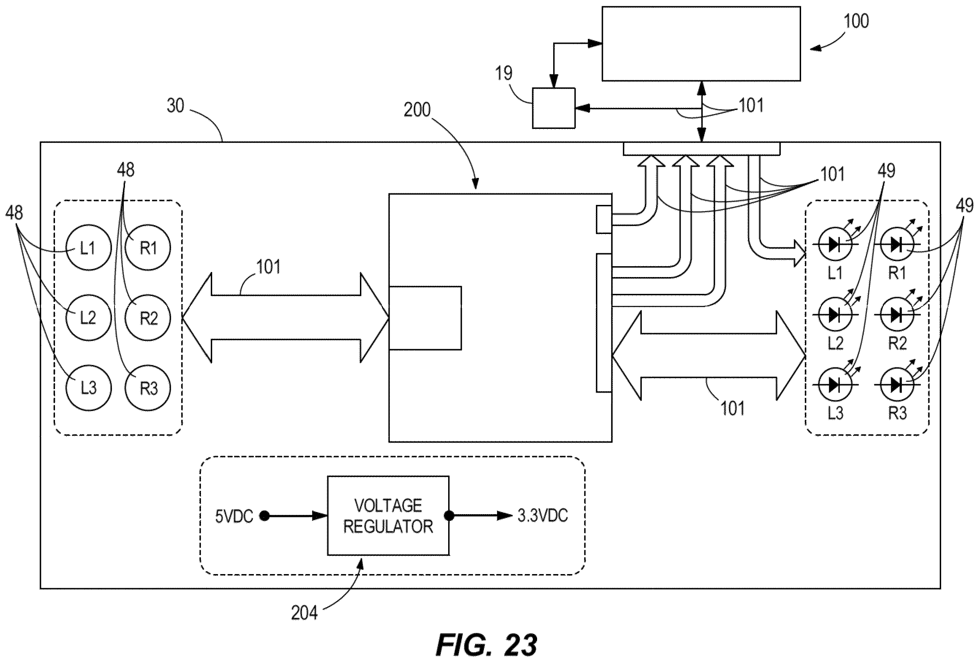

Fig. 23 depicts the input module 30 similar to the input module 30 described above with respect to Fig. 22, and the input module 30 depicted in Fig. 23 includes six sensors 48 and six lights 49 for six corresponding input zones 31.

**In** certain non-limiting independent examples, an exercise machine is configured for an exercise motion, and the exercise machine includes an input module configured to receive an input from a user. The input module includes a sensor configured to sense strain forces caused when the user engages the input module and to generate a signal corresponding to the sensed strain forces. A control system is configured to control the exercise machine based on the sensed strain forces.

Optionally, the exercise machine comprises a stationary bicycle or an elliptical machine. Optionally, a resistance device controls a resistance for performing the exercise motion and the control system is operatively coupled to the resistance device and configured to receive a resistance setting for controlling the resistance from the user via the input module and to control the resistance device based on the resistance setting. Optionally, the input module includes a light guide board to which the sensor is coupled and the sensor is configured to sense strain forces in the light guide board as the user engages the input module. Optionally, the input module includes an overlay layer coupled to the light guide board and defining an input zone which is configured to be engaged by the user and the sensor is configured to sense the strain forces in the light guide board as the user engages the input zone. Optionally, the input zone is one of a plurality of input zones defined by the overlay layer and the sensor is one of a plurality of sensors which are each coupled to the light guide board. Optionally, each sensor in the plurality of sensors corresponds to one input zone in the plurality of input zones such that each sensor is configured to sense the engagement of one input zone in the plurality of input zones. Optionally, the light guide board includes a printed circuit board assembly to which the sensor is coupled and a light is coupled and a light guide assembly configured to diffuse light emitted by the light. Optionally, the input module further includes an overlay layer coupled to the light guide board and defining an input zone which is configured to be engaged by the user, the sensor is configured to sense the strain forces in the light guide board as the user engages the input zone and the light diffused by the light guide assembly propagates through the overlay layer. Optionally, the light guide assembly defines a cutout in which the light is received. Optionally, the light is one of a plurality of lights coupled to the printed circuit board assembly and the light guide assembly includes a plurality of light guides configured to diffuse light emitted by the plurality of lights and one or more barrier members that isolate each light guide in the plurality of light guides from each other, the barrier members being configured to prevent light diffused by one light guide in the plurality of light guides from propagating into another light guide in the plurality of light guides. Optionally, the light guide assembly includes a diffusion layer configured to diffuse light propagating from the plurality of light guides. Optionally, a frame is configured to support the user and a stiffening plate coupled to the frame and configured to isolate the light guide board from the frame thereby preventing non-input-zone-engagement forces applied to the frame from straining the light guide board.

In certain non-limiting independent examples, an input module is configured to receive input from a user using an exercise machine which is configured for an exercise motion, the input module including a printed circuit board assembly and a sensor coupled to the printed circuit board assembly, the sensor configured to sense strain forces in the printed circuit board assembly caused when the user engages the input module and to generate a signal corresponding to the sensed strain forces.

Optionally, a printed circuit board assembly with a light coupled thereto and a light guide assembly coupled to the printed circuit board assembly and configured to diffuse light emitted by the light. Optionally, the light guide assembly defines a cutout in which the light is received. Optionally, the light is one of a plurality of lights coupled to the printed circuit board assembly, and the light guide assembly includes a plurality of light guides and a one or more barrier members that isolate each light guide in the plurality of light guides from each other, the barrier members being configured to prevent light diffused by one light guide in the plurality of light guides from propagating into another light guide in the plurality of light guides. Optionally, a control system is configured to receive the signal from the sensor and send command signals to the exercise machine. Optionally, an overlay layer defining an input zone which is configured to be engaged by the user, and the sensor is configured to sense the strain forces in the printed circuit board assembly as the user engages the input zone. Optionally, the input zone is part of a plurality of input zones defined by the overlay layer and the sensor is a one of a plurality of sensors which are each coupled to the printed circuit board assembly and wherein each sensor in the plurality of sensors corresponds to one input zone in the plurality of input zone such that each sensor is configured to sense engagement of one input zone in the plurality of input zones.

In the present description, certain terms have been used for brevity, clarity, and understanding. No unnecessary limitations are to be inferred therefrom beyond the requirement of the prior art because such terms are used for descriptive purposes and are intended to be broadly construed. The different apparatuses, systems, and method steps described herein may be used alone or in combination with other apparatuses, systems, and methods.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

This written description uses examples to disclose the invention and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims.

## Claims

1. An exercise machine (10) configured for an exercise motion, the exercise machine (10) comprising:
an input module (30) configured to receive an input from a user, the input module (30) includes a sensor (48) configured to sense strain forces caused when the user engages the input module (30) and to generate a signal corresponding to the sensed strain forces; and
a control system (100) configured to control the exercise machine (10) based on the sensed strain forces;
**characterized in that** the input module (30) includes a light guide board (51) to which the sensor (48) is coupled, and the sensor (48) is configured to sense strain forces in the light guide board (51) as the user engages the input module (30).

2. The exercise machine (10) according to claim 1, wherein the exercise machine (10) comprises a stationary bicycle or an elliptical machine.

3. The exercise machine (10) according to claim 1 or 2, further comprising a resistance device (90) that controls a resistance for performing the exercise motion; and
wherein the control system (100) is operatively coupled to the resistance device (90) and configured to receive a resistance setting for controlling the resistance from the user via the input module (30) and to control the resistance device (90) based on the resistance setting.

4. The exercise machine (10) according to any one of the preceding claims, wherein the input module (30) further includes an overlay layer (53) coupled to the light guide board (51) and defining an input zone (31) which is configured to be engaged by the user, and wherein the sensor (48) is configured to sense the strain forces in the light guide board (51) as the user engages the input zone (31).

5. The exercise machine (10) according to claim 4, wherein the input zone (31) is one of a plurality of input zones (31) defined by the overlay layer (53) and the sensor (48) is one of a plurality of sensors (48) which are each coupled to the light guide board (51).

6. The exercise machine (10) according to claim 5, wherein each sensor (48) in the plurality of sensors (48) corresponds to one input zone (31) in the plurality of input zones (31) such that each sensor (48) is configured to sense the engagement of one input zone (31) in the plurality of input zones (31).

7. The exercise machine (10) according to any one of the preceding claims, wherein the light guide board (51) includes:
a printed circuit board assembly (52) to which the sensor (48) is coupled and a light (49) is coupled; and
a light guide assembly (60) configured to diffuse light emitted by the light (49).

8. The exercise machine (10) according to claim 7, wherein the input module (30) further includes an overlay layer (53) coupled to the light guide board (51) and defining an input zone (31) which is configured to be engaged by the user, wherein the sensor (48) is configured to sense the strain forces in the light guide board (51) as the user engages the input zone (31); and
wherein the light diffused by the light guide assembly (60) propagates through the overlay layer (53).

9. The exercise machine (10) according to claim 7 or 8, wherein the light guide assembly (60) defines a cutout (66) in which the light (49) is received.

10. The exercise machine (10) according to any one of claims 7-9, wherein the light (49) is one of a plurality of lights (49) coupled to the printed circuit board assembly (52), and wherein the light guide assembly (60) includes:
a plurality of light guides (63) configured to diffuse light emitted by the plurality of lights (49); and
a one or more barrier members (65) that isolate each light guide (63) in the plurality of light guides (63) from each other, the barrier members (65) being configured to prevent light diffused by one light guide (63) in the plurality of light guides (63) from propagating into another light guide (63) in the plurality of light guides (63).

11. The exercise machine (10) according to claim 10, wherein the light guide assembly (60) includes a diffusion layer (64) is configured to diffuse light propagating from the plurality of light guides (63).

12. The exercise machine (10) according to any one of the preceding claims, further comprising:
a frame (11) configured to support the user; and
a stiffening plate (70) coupled to the frame (11) and configured to isolate the light guide board (51) from the frame (11) thereby preventing non-input-zone-engagement forces applied to the frame (11) from straining the light guide board (51).

## Patentansprüche

1. Übungsgerät (10), die für eine Übungsbewegung konfiguriert ist, das Übungsgerät (10) umfassend:
ein Eingabemodul (30), das dazu konfiguriert ist, eine Eingabe von einem Benutzer zu empfangen, wobei das Eingabemodul (30) einen Sensor (48) einschließt, der dazu konfiguriert ist, Belastungskräfte, die verursacht werden, wenn der Benutzer das Eingabemodul (30) betätigt, zu erfassen und ein Signal zu erzeugen, das den erfassten Belastungskräften entspricht; und
ein Steuersystem (100), das dazu konfiguriert ist, das Übungsgerät (10) basierend auf den erfassten Belastungskräften zu steuern;
**dadurch gekennzeichnet, dass** das Eingabemodul (30) eine Lichtleiterplatte (51) einschließt, an die der Sensor (48) gekoppelt ist, und der Sensor (48) dazu konfiguriert ist, Belastungskräfte in der Lichtleiterplatte (51) zu erfassen, wenn der Benutzer das Eingabemodul (30) betätigt.

2. Übungsgerät (10) nach Anspruch 1, wobei das Übungsgerät (10) ein stationäres Fahrrad oder eine Ellipsenmaschine umfasst.

3. Übungsgerät (10) nach Anspruch 1 oder 2, weiter umfassend eine Widerstandsvorrichtung (90), die einen Widerstand zum Durchführen der Übungsbewegung steuert; und
wobei das Steuersystem (100) an die Widerstandsvorrichtung (90) wirkgekoppelt ist und dazu konfiguriert ist, eine Widerstandseinstellung zum Steuern des Widerstands von dem Benutzer über das Eingabemodul (30) zu empfangen und die Widerstandsvorrichtung (90) basierend auf der Widerstandseinstellung zu steuern.

4. Übungsgerät (10) nach einem der vorstehenden Ansprüche, wobei das Eingabemodul (30) weiter eine Überlagerungsschicht (53) einschließt, die an die Lichtleiterplatte (51) gekoppelt ist und eine Eingabezone (31) definiert, die dazu konfiguriert ist, durch den Benutzer betätigt zu werden, und wobei der Sensor (48) dazu konfiguriert ist, die Belastungskräfte in der Lichtleiterplatte (51) zu erfassen, wenn der Benutzer die Eingabezone (31) betätigt.

5. Übungsgerät (10) nach Anspruch 4, wobei die Eingabezone (31) eine von einer Vielzahl von Eingabezonen (31) ist, die durch die Überlagerungsschicht (53) definiert sind, und der Sensor (48) einer von einer Vielzahl von Sensoren (48) ist, die jeweils an die Lichtleiterplatte (51) gekoppelt sind.

6. Übungsgerät (10) nach Anspruch 5, wobei jeder Sensor (48) in der Vielzahl von Sensoren (48) einer Eingabezone (31) in der Vielzahl von Eingabezonen (31) derart entspricht, dass jeder Sensor (48) dazu konfiguriert ist, die Betätigung einer Eingabezone (31) in der Vielzahl von Eingabezonen (31) zu erfassen.

7. Übungsgerät (10) nach einem der vorstehenden Ansprüche, wobei die Lichtleiterplatte (51) einschließt:
eine gedruckte Leiterplattenbaugruppe (52), an die der Sensor (48) gekoppelt ist und ein Licht (49) gekoppelt ist; und
eine Lichtleiterbaugruppe (60), die dazu konfiguriert ist, durch das Licht (49) emittiertes Licht zu streuen.

8. Übungsgerät (10) nach Anspruch 7, wobei das Eingabemodul (30) weiter eine Überlagerungsschicht (53) einschließt, die an die Lichtleiterplatte (51) gekoppelt ist und eine Eingabezone (31) definiert, die dazu konfiguriert ist, durch den Benutzer betätigt zu werden, wobei der Sensor (48) dazu konfiguriert ist, die Belastungskräfte in der Lichtleiterplatte (51) zu erfassen, wenn der Benutzer die Eingabezone (31) betätigt; und
wobei sich das durch die Lichtleiterbaugruppe (60) gestreute Licht durch die Überlagerungsschicht (53) hindurch ausbreitet.

9. Übungsgerät (10) nach Anspruch 7 oder 8, wobei die Lichtleiterbaugruppe (60) einen Ausschnitt (66) definiert, in dem das Licht (49) aufgenommen ist.

10. Übungsgerät (10) nach einem der Ansprüche 7-9, wobei das Licht (49) eines von einer Vielzahl von Lichtern (49) ist, die an die gedruckte Leiterplattenbaugruppe (52) gekoppelt ist, und wobei die Lichtleiterbaugruppe (60) einschließt:
eine Vielzahl von Lichtleitern (63), die dazu konfiguriert ist, durch die Vielzahl von Lichtern (49) emittiertes Licht zu streuen; und
ein oder mehrere Barriereelemente (65), die jeden Lichtleiter (63) in der Vielzahl von Lichtleitern (63) voneinander isolieren, wobei die Barriereelemente (65) dazu konfiguriert sind, zu verhindern, dass sich durch einen Lichtleiter (63) in der Vielzahl von Lichtleitern (63) gestreutes Licht in einen anderen Lichtleiter (63) in der Vielzahl von Lichtleitern (63) ausbreitet.

11. Übungsgerät (10) nach Anspruch 10, wobei die Lichtleiterbaugruppe (60) eine Streuschicht (64) einschließt, die dazu konfiguriert ist, Licht zu streuen, das sich von der Vielzahl von Lichtleitern (63) ausbreitet.

12. Übungsgerät (10) nach einem der vorstehenden Ansprüche, weiter umfassend:
einen Rahmen (11), der dazu konfiguriert ist, den Benutzer zu stützen; und
eine Versteifungsplatte (70), die an den Rahmen (11) gekoppelt ist und dazu konfiguriert ist, die Lichtleiterplatte (51) von dem Rahmen (11) zu isolieren, wodurch verhindert wird, dass Kräfte, die nicht die Eingabezone betätigen, die auf den Rahmen (11) ausgeübt werden, die Lichtleiterplatte (51) belasten.

## Revendications

1. Machine d'exercice (10) configurée pour un mouvement d'exercice, la machine d'exercice (10) comprenant :
un module d'entrée (30) configuré pour recevoir une entrée en provenance d'un utilisateur, le module d'entrée (30) inclut un capteur (48) configuré pour détecter des forces de contrainte provoquées lorsque l'utilisateur vient en contact avec le module d'entrée (30) et pour générer un signal correspondant aux forces de contrainte détectées ; et
un système de commande (100) configuré pour commander la machine d'exercice (10) sur la base des forces de contrainte détectées ;
**caractérisée en ce que** le module d'entrée (30) inclut une carte de guidage de lumière (51) à laquelle le capteur (48) est couplé, et le capteur (48) est configuré pour détecter des forces de contrainte dans la carte de guidage de lumière (51) lorsque l'utilisateur vient en contact avec le module d'entrée (30).

2. Machine d'exercice (10) selon la revendication 1, dans laquelle la machine d'exercice (10) comprend une bicyclette stationnaire ou une machine elliptique.

3. Machine d'exercice (10) selon la revendication 1 ou la revendication 2, comprenant en outre un dispositif de résistance (90) qui commande une résistance pour effectuer le mouvement d'exercice ; et
dans laquelle le système de commande (100) est couplé de manière fonctionnelle au dispositif de résistance (90) et configuré pour recevoir un réglage de résistance pour commander la résistance en provenance de l'utilisateur par l'intermédiaire du module d'entrée (30) et pour commander le dispositif de résistance (90) sur la base du réglage de résistance.

4. Machine d'exercice (10) selon l'une quelconque des revendications précédentes, dans laquelle le module d'entrée (30) inclut en outre une couche de recouvrement (53) accouplée à la carte de guidage de lumière (51) et délimitant une zone d'entrée (31) qui est configurée pour être mise en contact par l'utilisateur, et dans laquelle le capteur (48) est configuré pour détecter les forces de contrainte dans la carte de guidage de lumière (51) lorsque l'utilisateur vient en contact avec la zone d'entrée (31).

5. Machine d'exercice (10) selon la revendication 4, dans laquelle la zone d'entrée (31) est l'une parmi une pluralité de zones d'entrée (31) délimitées par la couche de recouvrement (53) et le capteur (48) est l'un parmi une pluralité de capteurs (48) qui sont chacun couplés à la carte de guidage de lumière (51).

6. Machine d'exercice (10) selon la revendication 5, dans laquelle chaque capteur (48) parmi la pluralité de capteurs (48) correspond à une zone d'entrée (31) parmi la pluralité de zones d'entrée (31) de sorte que chaque capteur (48) est configuré pour détecter le contact avec une zone d'entrée (31) parmi la pluralité de zones d'entrée (31).

7. Machine d'exercice (10) selon l'une quelconque des revendications précédentes, dans laquelle la carte de guidage de lumière (51) inclut :
un ensemble carte de circuit imprimé (52) auquel le capteur (48) est couplé et une lumière (49) est couplée ; et
un ensemble de guidage de lumière (60) configuré pour diffuser une lumière émise par la lumière (49).

8. Machine d'exercice (10) selon la revendication 7, dans laquelle le module d'entrée (30) inclut en outre une couche de recouvrement (53) couplée à la carte de guidage de lumière (51) et délimitant une zone d'entrée (31) qui est configurée pour être mise en contact par l'utilisateur, dans laquelle le capteur (48) est configuré pour détecter les forces de contrainte dans la carte de guidage de lumière (51) lorsque l'utilisateur vient en contact avec la zone d'entrée (31) ; et
dans laquelle la lumière diffusée par l'ensemble de guidage de lumière (60) se propage à travers la couche de recouvrement (53).

9. Machine d'exercice (10) selon la revendication 7 ou la revendication 8, dans laquelle l'ensemble de guidage de lumière (60) délimite un évidement (66) dans laquelle la lumière (49) est reçue.

10. Machine d'exercice (10) selon l'une quelconque des revendications 7 à 9, dans laquelle la lumière (49) est l'une parmi une pluralité de lumières (49) couplées à l'ensemble carte de circuit imprimé (52), et dans laquelle l'ensemble de guidage de lumière (60) inclut :
une pluralité de guides de lumière (63) configurés pour diffuser une lumière émise par la pluralité de lumières (49) ; et
un ou plusieurs éléments barrière (65) qui isolent chaque guide de lumière (63) parmi la pluralité de guides de lumière (63) les uns des autres, les éléments barrière (65) étant configurés pour empêcher la propagation d'une lumière diffusée par un guide de lumière (63) parmi la pluralité de guides de lumière (63) dans un autre guide de lumière (63) parmi la pluralité de guides de lumière (63).

11. Machine d'exercice (10) selon la revendication 10, dans laquelle l'ensemble de guidage de lumière (60) inclut une couche de diffusion (64) configurée pour diffuser une lumière se propageant depuis la pluralité de guides de lumière (63).

12. Machine d'exercice (10) selon l'une quelconque des revendications précédentes, comprenant en outre :
un cadre (11) configuré pour supporter l'utilisateur ; et
une plaque de raidissement (70) accouplée au cadre (11) et configurée pour isoler la carte de guidage de lumière (51) du cadre (11) ce qui permet d'empêcher des forces de contact hors zone d'entrée appliquées au cadre (11) d'exercer une contrainte sur la carte de guidage de lumière (51).
